# EUROPÄISCHE PATENTSCHRIFT

(11) **EP 1 261 256 B1**
(45) Veröffentlichungstag und Bekanntmachung des Hinweises auf die Patenterteilung: **09.11.2005**
(21) Anmeldenummer: 01923609.0
(22) Anmeldetag: 26.02.2001
(51) Int. Cl.: A01N 59/26, A01M 13/00, A23B 9/18, A23B 7/144, A01N 3/00, C01B 25/06

(54) **VERFAHREN UND VORRICHTUNG ZUR SCHÄDLINGSBEKÄMPFUNG MIT PHOSPHIN-LUFT-MISCHUNGEN UND DEREN HERSTELLUNG**
METHOD AND DEVICE FOR PEST CONTROL USING PHOSPHINE-AIR MIXTURES AND METHOD FOR PRODUCING THESE MIXTURES
PROCEDE ET DISPOSITIF DE LUTTER CONTRE DES NUISIBLES EN UTILISANT DES MELANGES PHOSPHINE-AIR DE FAIBLE CONCENTRATION ET PROCEDE DE PRODUCTION DE CES MELANGES

(30) Priorität: 01.03.2000 DE 10009888
(43) Veröffentlichungstag der Anmeldung: 04.12.2002
(73) Patentinhaber: Münzel, Martin, 85354 Freising (DE); Schellhaas, Rainer, 69469 Weinheim (DE)
(72) Erfinder: Münzel, Martin, 85354 Freising (DE); Schellhaas, Rainer, 69469 Weinheim (DE)
(74) Vertreter: Andrae, Steffen
(86) Internationale Anmeldenummer: PCT/EP2001/002182
(87) Internationale Veröffentlichungsnummer: WO 2001/064037

(56) Entgegenhaltungen:
- EP-A- 0 783 896
- EP-A- 0 865 731
- EP-A- 0 981 960
- GB-A- 2 177 004
- US-A- 3 788 545
- US-A- 3 854 894
- US-A- 5 573 740

## Beschreibung

Die Erfindung betrifft Verfahren zur Bekämpfung von Schädlingen in hinreichend gasdichten Räumen, insbesondere solchen, in denen Schüttgüter (landwirtschaftliche Güter und andere durch Schädlingsbefall gefährdete Güter) lose oder verpackt, z.B. in Säcken, und andere Güter, z.B. aus Holz, gelagert sind oder gelagert waren oder gelagert werden sollen, unter Verwendung von gasförmigem Phosphin (Phosphorwasserstoff, PH₃) als Begasungsmittel sowie eine Vorrichtung zur Durchführung eines solchen Verfahrens. In verallgemeinerter Form betrifft die Erfindung ferner ein Verfahren zur direkten Herstellung von niederkonzentrierten Phosphin-Luft-Gemischen mit PhosphinKonzentration von weniger als etwa 1,80 vol.-% (18.000 ppm).

Es ist bekannt, zur Bekämpfung von Lager-, Vorrats- und Gartenschädlingen, insbesondere in Form von Insekten und Nagetieren, auf die bioziden Eigenschaften von gasförmigem Phosphin zurückzugreifen.

Ursprünglich wurde dabei so vorgegangen, daß man zur Schädlingsbekämpfung durch Begasung von Räumen, in denen durch einen Schädlingsbefall gefährdete Erzeugnisse gelagert sind, gelagert waren oder gelagert werden sollen, z.B. landwirtschaftliche Güter wie Getreide, mit geeigneten festen Metallphosphiden arbeitete, die beim Kontakt mit der Feuchtigkeit der Luft gasförmiges Phosphin freisetzen. Die metallphosphidhaltigen Präparate werden z.B. in Form von Preßkörpern oder in beutelartigen Verpackungen eingesetzt, in die die Luftfeuchtigkeit eindringen konnte und aus denen das sukzessive freigesetzte Phosphin in stark verdünnter Form entweichen und anschließend seine biozide Wirkung entfalten konnte.

Aus verschiedenen Gründen, zu denen die Giftigkeit der verwendeten Metallphosphide, die Exothermie in der Reaktion mit der Luftfeuchtigkeit sowie Probleme einer gleichmäßigen Phosphin-Freisetzung im Raum und über die Zeit gehörten, wiesen diese herkömmlichen Verfahren jedoch zahlreiche Nachteile auf, die in den einleitenden Abschnitten der nachfolgend genannten Druckschriften des Standes der Technik in näheren Einzelheiten geschildert werden.

Es wurde ferner bereits vorgeschlagen, das Phosphin nicht in Form fester Vorläuferverbindungen einzusetzen, sondern direkt als Gas. So wird in der GB-A-2 177 004 bzw. der entsprechenden südafrikanischen Patentanmeldung 864806 vorgeschlagen, zur Begasung eine Mischung aus Phosphin und einem inerten Verdünnungsgas einzusetzen, die in fertiger Form in Druckbehältern für die Verwendung bereitgestellt wird. Das Verdünnungsgas ist vorzugsweise Kohlendioxid, und der Phosphinanteil liegt vorzugsweise bei weniger als 3 Vol.-%, bezogen auf das Verdünnungsgas. Diese Gasmischung soll so eingesetzt werden, daß man die Mischung direkt aus dem Druckbehälter über eine geeignete Leitung in die Behälter oder Lagerräume, in denen landwirtschaftliche Produkte, zum Beispiel Getreide, lagern, einleitet.

Bei diesem Verfahren stellt es einen großen Nachteil dar, daß das Phosphin nur in sehr verdünnter Form bereitgestellt wird, was dazu führt, daß am Einsatzort große Mengen an Druckbehältern mit der fertigen Gasmischung gehandhabt werden müssen. Ferner ist es bei der einfachen Einleitung einer fertigen Mischung aus Phosphin und Inertgas nicht gewährleistet, daß die Gasmischung sich tatsächlich gleichmäßig im zu behandelnden Gut und für eine ausreichende Zeit verteilt.

Ein weiterer Vorschlag, zur Begasung gasförmiges Phosphin einzusetzen, findet sich in der DE-A-37 07 453. In der genannten Schrift wird vorgeschlagen, gasförmiges Phosphin aus einer herkömmlichen Stahlflasche abzublasen, nachdem ihm zuvor ein Inertgas, beispielsweise Kohlendioxid, zugegeben wurde. Das Inertgas soll dem gasförmigen Phosphin zugegeben werden, um zu verhindern, daß beim Austritt aus der Gasflasche zündfähige Phosphin-Luft-Gemische gebildet werden. Die Anwendung soll so erfolgen, daß nach einer üblichen Abdichtung eines Gebäudes, Großbehälters, eines Nagetierbaus usw. das gasförmige, mit Inertgas vermischte Phosphin einfach über ein Druckregel-/Feineinstellventil sowie über Verteiler-Ventile und Schlauchleitungen von außen in den zu begasenden Raum (zum Beispiel ein Gebäude, eine Silozelle, ein Schiffsladeraum) eingeleitet wird. Es wird davon ausgegangen, daß sich die phosphinhaltige Gasmischung von allein ausreichend in dem zu begasenden Raum verteilt.

Das Verfahren hat den Nachteil, daß das Phosphin in einer Vormischung mit Inertgas bereitgestellt werden muß bzw. daß neben einer Phosphinquelle in Form einer Stahlflasche zusätzlich besondere Inertgas-Quellen bereitgestellt werden müssen. Außerdem führt das Verfahren dazu, daß in Fällen der Begasung von Flach- oder Schüttlagern, zum Beispiel Getreidelagern, die mit Hilfe von gasdichten Folien gegen die Umgebung abgeschlossen sind, das zusätzlich eingeleitete Gas die Lager "aufbläst", wobei wiederum keine gleichmäßige Verteilung des Phosphins in den zu behandelnden landwirtschaftlichen Gütern gewährleistet ist. Ergänzend wird zum Stand der Technik noch verwiesen auf die DE-A-36 08 256, die DE-A-36 18 297 sowie die DE-A-38 37 560, die sich insbesondere mit der Abdichtung von Getreide-Flachlagern oder Schüttlagern befaßt.

Aus der älteren, nicht vor dem Prioritätstag der vorliegenden Anmeldung veröffentlichten DE 198 39 385 A1 ist ferner ein verfahren bekannt geworden, bei dem man, um mit konzentriertem Phosphorwasserstoff arbeiten zu können, diesen mit Luft mischt und die erhaltene Mischung unmittelbar anschließend, vor ihrer Abgabe in den zu begasenden Raum, durch eine wäßrige Flüssigkeit perlen läßt. Es kommt auf diese Weise zu keinerlei Übertritt von konzentriertem Phosphorwasserstoff direkt in die Luft des zu begasenden Raums, da der Ort der Mischungsherstellung und der Luftraum des zu begasenden Raums stets durch eine Wasserschicht getrennt sind. Unter der Wasserschicht bzw. vor dem Eintritt der Mischung in die Wasserschicht können jedoch zündfähige Gemische gebildet werden. Außerdem ist die Strömungsgeschwindigkeit der Luft bzw. der Gasmischung begrenzt, und eine effiziente Umwälzung der Atmosphäre eines begasten Raums unter Anreicherung mit Phosphorwasserstoff ist wegen der im Strömungsweg angeordneten Wasserschicht nicht ohne weiteres möglich.

Es ist Aufgabe der vorliegenden Erfindung, unter Vermeidung der Nachteile des genannten Standes der Technik ein Verfahren zur Bekämpfung von Schädlingen in hinreichend abgedichteten Räumen und den ggf. darin gelagerten Gütern unter Verwendung von gasförmigem Phosphin als Begasungsmittel anzugeben, bei dem mit im wesentlichen reinem konzentriertem Phosphin ohne zusätzliche Bereitstellung und/oder Einleitung von Inertgasen gearbeitet werden kann und das eine Arbeitsweise ermöglicht, bei der eine gleichmäßige Verteilung des Phosphins im behandelten Raum gewährleistet wird, ohne daß die Gasmenge in dem behandelten Lager nennenswert erhöht wird.

Es ist ferner Aufgabe der vorliegenden Erfindung, eine für die Durchführung eines solchen Verfahrens besonders geeignete Vorrichtung anzugeben.

Die genannte Aufgabe wird in allgemeinster Form bei einem Verfahren zur Bekämpfung von Schädlingen in hinreichend gasdichten Räumen unter Verwendung von gasförmigem Phosphin (Phosphorwasserstoff, PH₃) als Begasungsmittel dadurch gelöst, daß man eine Quelle für Phosphin in Form einer Phosphin-Gasflasche bereitstellt, die Phosphin in konzentrierter Form liefert, das konzentrierte gasförmige Phosphin aus der Phosphinquelle durch eine phosphindurchlässige Trennwand hindurch so in einen Luftstrom einleitet, daß das eingeleitete Phosphin im Bereich seiner Einleitung sofort unter die Konzentrationsgrenze für die Selbstentzündlichkeit von Phosphin-Luft-Gemischen verdünnt wird, und das gebildete verdünnte Phosphin-Luft-Gemisch in den zu begasenden Raum einleitet.

Gemäß der bevorzugten Ausführungsform eines solchen Verfahrens gemäß Anspruch 2 erfolgt die Einleitung des Phosphins in den Luftstrom durch eine phosphindurchlässige Trennwand, die von der Luft umströmt wird und einen flächigen Austritt des Phosphins aus der Phosphinquelle in den Luftstrom durch Poren oder durch Diffusion ermöglicht.

Vorzugsweise wird gemäß Anspruch 3 die phosphindurchlässige Trennwand von einem porösen Schalldämpfer für pneumatische Ausrüstungen oder einem porösen Rohr oder Schlauch oder einem Rohr oder Schlauch aus einem phosphindurchlässigen Material gebildet.

Gemäß Anspruch 4 ist die Eintrittsstelle vorzugsweise in einem Rohr angeordnet, durch das der Luftstrom hindurchgeleitet wird.

Gemäß Anspruch 5 kann der Luftstrom wenigstens teilweise aus Luft bestehen, die aus den zu begasenden, hinreichend gasdicht abgedichteten Raümen und/oder den darin gelagerten Gütern abgesaugt wurde, und die Luft nach ihrer Anreicherung mit Phosphin wieder in die zu begasenden Räume und/oder die darin gelagerten Güter zurückgeführt werden.

Gemäß Anspruch 6 erfolgt die Begasung als Begasung von mit Schädlingen befallenen Räumen und darin gelagerten landwirtschaftlichen Gütern oder Gütern in gasdicht abgedeckten Getreide-Flachlagern oder -Schüttlagern.

Gemäß Anspruch 7 kann das Phosphin vor seiner Einleitung in den Luftstrom einer Reinigungsbehandlung zur Entfernung von Diphosphin und/oder der Luftstrom einer Reinigungsbehandlung zur Entfernung von Staub und/oder Hydroxyl-Radikalen unterzogen werden.

Gemäß einem allgemeineren Aspekt betrifft die vorliegende Erfindung ferner ein Verfahren zur Herstellung von niederkonzentrierten Phosphin-Luft-Gemischen mit Phosphinkonzentrationen von weniger als etwa 1,80 Volumen-%, bei dem man eine Quelle für Phosphin in Form einer Phosphin-Gasflasche bereitstellt, die Phosphin in konzentrierter, fremdgasfreier Form liefert, das konzentrierte gasförmige Phosphin aus der Phosphin-Gasflasche durch eine phosphindurchlässige Trennwand so in einen Luftstrom einleitet, daß das eingeleitete Phosphin an seiner Einleitungsstelle sofort unter die Konzentrationsgrenze für die Selbstentzündlichkeit von Phosphin-Luft-Gemischen verdünnt wird, und das gebildete verdünnte Phosphin-Luft-Gemisch seiner Endverwendung zuführt.

Ein weiterer Aspekt der Erfindung betrifft eine für die Durchführung eines derartigen Verfahrens besonders bevorzugte Vorrichtung mit einer Gasflasche mit einem Druckregelventil, die Phosphin in konzentrierter Form enthält, wobei die Gasflasche mit einer Rohrleitung verbunden ist, auf deren Ende ein PH₃-durchlässiges poröses Abschlußstück montiert ist, und das Ende der Rohrleitung mit dem porösen Abschlußsstück im zentralen Bereich eines Rohrs angeordnete ist, das mit Zu- und Ableitungen für einen zwangsgeförderten Luftstrom verbunden ist.

Vorzugsweise ist das poröse Abschlußstück ein poröser Schalldämpfer für pneumatische Ausrüstungen.

Die Erfindung betrifft die Schädlingsbekämpfung durch Begasung von "hinreichend abgedichteten Räume" an sich beliebiger Art. Unter "hinreichend abgedichtet" versteht man dabei Räume, die einerseits so gut abgedichtet sind, daß in ihnen die gewünschten, für die Schädlingsbekämpfung benötigten Phosphinkonzentrationen für ausreichend lange Zeiträume aufgebaut werden können, während es andererseits zu keinem die Umgebung der abgedichteten Räume gefährdenden bzw. unannehmbaren Phosphinaustritt kommt. Je nach Art und Ort der begasten Räume können die Anforderungen an deren Abdichtung und die außerhalb der begasten Räume zulässigen meßbaren Phosphinkonzentrationen sehr unterschiedlich sein.

So können die Räume auch Gebäude, Gebäudeteile, Gewächshäuser, Transportmittel u.a. sein, die aufgrund ihrer Bauart hinreichend gasdicht sind. Sollte das nicht der Fall sein, müssen sie zur Begasung mit bekannten Methoden abgedichtet werden. Gasdichte Räume können auch mit bekannten Methoden künstlich erzeugt werden, z.B. als Sackstapel, die mit Planen gasdicht eingepackt werden.

Bei den Schädlingen kann es sich um Vorratsschädlinge handeln, die sich in landwirtschaftlichen Gütern bzw. in be- oder verarbeiteten landwirtschaftlichen Produkten befinden, oder aber in den zu behandelnden Lager- und Produktionsräumen, wozu z.B. auch Maschinen und Rohrleitungen zählen. Die Schädlinge können aber auch Hygiene-, Gewächshaus-, Forst- oder Materialschädlinge sein, die sich in den zu begasenden gasdichten Räumen bzw. den darin befindlichen Materialien und Gütern aufhalten. Zur Vereinfachung wird die Erfindung nachfolgend schwerpunktsmäßig am Beispiel der Bekämpfung von typischen Vorratsschädlingen näher erläutert.

Dabei erfolgt die Begasung als Begasung von Räumen, in denen landwirtschaftliche Produkte im weitesten Sinne gelagert sind, normalerweise als Schüttgüter, die lose gelagert sein können, die sich jedoch auch in Verpackungseinheiten, z.B. Säcken, befinden können, und die durch Schädlingsbefall gefährdet sind. Die Güter können z.B. gelagertes Erntegut sein, z.B. Getreide und Wurzelfrüchte, jedoch auch auch ihre Weiterverabeitungsprodukte, z.B. Mahlgut, Getreidemehle oder Stärkemehle, sein. Die Güter können auch tierischen Ursprungs oder z.B. Holz, z.B. für eine Verwendung als Baumaterial oder Werkstoff, oder Pflanzen, insbesondere getrocknete oder solche, die sich in ihrer Wachstumsruhe befinden, sein. Ferner können die zu begasenden Räume auch weitgehend leer sein oder nur noch Reste von darin gelagerten Gütern enthalten, z.B. von solchen, in denen sich Schädlinge halten können. Neben Lagern für unterschiedliche landwirtschaftliche Güter können die zu begasenden Räume auch Fabrikationsstätten sein, z.B. solche der Lebensmittelindustrie, oder Getreidemühlen.

Bei der vorliegenden Erfindung wird das Phosphin für die Begasung direkt aus einer inertgasfreien Phosphinquelle eingesetzt. Die Phosphinquelle ist vorzugsweise eine übliche, Phosphin enthaltende Stahl-Druckflasche. Das Phosphin kann in im wesentlichen reiner, hochkonzentrierter Form eingesetzt und - gegebenenfalls nach einer gewissen Vorreinigung der Mischungspartner - direkt mit Umgebungsluft vermischt werden. Das hat den Vorteil, daß nur ein Minimum an Gasbehältern, nämlich nur eine oder mehrere Phosphin-Stahlflasche(n), am Anwendungsort bereitgestellt werden muß. Das in einer derartigen Stahlflasche enthaltene Phosphin muß dabei nicht in hochreiner Form vorliegen, in der es zum Beispiel für Verwendungen in der Elektronikindustrie und im chemischen Labor benötigt wird, sondern kann auch in einer weniger hochgereinigten Stufe vorliegen. Wenn im Rahmen der vorliegenden Anmeldung davon gesprochen wird, daß das Phosphin in konzentrierter Form oder in inertgasfreier Form eingesetzt wird, schließt das die Anwesenheit von geringen Inertgasmengen nicht aus. Was mit den genannten Ausführungen letztlich zum Ausdruck gebracht werden soll, ist, daß das Phosphin ohne absichtlichen Inertgaszusatz eingesetzt werden kann und daß es bei der Herstellung von Phosphin-Luft-Gemischen ohne zwischengeschaltete spezielle Vermischung mit Inertgasen verwendet wird. Die gebildeten Gemische enthalten außer den natürlichen Bestandteilen der Luft und dem Phosphin keine zusätzlichen, verfahrensbedingten Inertgasanteile.

Es folgt für den Fachmann allerdings, daß das erfindungsgemäße verfahren dann, wenn zum Beispiel kein reines Phosphin zur Verfügung steht, auch mit Phosphin mit Inertgasanteilen durchgeführt werden kann, wenn auch bei einer derartigen Ausführungsform nicht alle durch die Erfindung erzielbaren Vorteile voll ausgeschöpft werden.

Bei dem erfindungsgemäßen Verfahren wird das konzentrierte gasförmige Phosphin aus der Phosphinquelle so in einen Luftstrom eingeleitet, daß das eingeleitete Phosphin an seiner Einleitungsstelle sofort von dem Luftstrom aufgenommen und unter die Konzentrationsgrenze für die Selbstentzündlichkeit von Phosphin-Luft-Gemischen verdünnt wird. Das wird dadurch erreicht, daß die Einleitung des Phosphins in den Luftstrom durch eine phosphindurchlässige Trennschicht, d.h. eine Trennschicht mit feinen Poren oder eine Trennschicht aus einem Material, durch das eine allmähliche Diffusion von Phosphin möglich ist, erfolgt, so daß ein flächiger Phosphin-Austrittsbereich mit nur geringen lokalen Phosphinkonzentrationen erhalten wird, wodurch gewährleistet ist, daß in der Grenzschicht sowohl das Volumen an Phosphin-Luft-Gemischen mit zündfähigen Konzentrationen als auch die Verweilzeit des einströmenden Phosphins in der Grenzschicht sehr klein ist.

Die phosphindurchlässige Trennschicht, vorzugsweise in Form einer formstabilen Trennwand, kann, was das Material und/oder ihre räumliche Form angeht, unterschiedlich gestaltet sein. Sie weist jedoch in der Regel eine porige Struktur auf und/oder enthält ein Material, durch das Phosphin hindurchdiffundieren kann. Der Austritt des Phosphins in den Luftstrom erfolgt mit einem geringen Druck und einer eher geringen Strömungsgeschwindigkeit und trägt in der Regel den Charakter eines langsamen Heraussickerns. Der begasungsseitig über die flächige Austrittsstelle der Trennwand streichende Luftstrom nimmt das Phosphin sofort auf und sorgt für eine schnelle Verteilung.

In der Praxis haben sich verschiedene Ausgestaltungen für die Phosphineinleitung in den Luftstrom als geeignet erwiesen. Eine besonders vorteilhafte Einleitung wird erreicht, wenn man den Luftstrom durch ein offenes Rohr strömen läßt, in das seitlich ein dünnes Phosphineinleitungsrohr eingeführt ist, dessen Ende mit einer phosphindurchlässigen Trennwand abgeschlossen ist und so abgebogen ist, daß das Phosphin im wesentlichen zentral in den Luftstrom in dem Rohr austritt. Zur gleichmäßigen, flächigen Verteilung des austretenden Phosphins ist die Austrittsöffnung des Phosphineinleitungsrohrs gemäß einer bevorzugten Ausführungsform mit einer porösen Kappe versehen, die beispielsweise ein handelsüblicher Schalldämpfer für pneumatische Ausrüstungen sein kann. Derartige Schalldämpfer sind beispielsweise die unter der Marke Vyon® (Fa. Wilhelm Köpp, Aachen) erhältlichen Handelsprodukte. Bei diesen handelt es sich um einteilige, poröse Formteile mit dem Aussehen eines geschlossenen abgerundeten kurzen Zylinders, die aus einem porösen durchlässigen Kunststoff hergestellt sind. Die genannten Handelsprodukte werden dabei durch ein Sinterverfahren aus Niederdruck-Polyethylen gewonnen und sind mit einem Anschlußstück mit Gewinde versehen, das ihre direkte Verbindung mit einer Rohrleitung ermöglicht. Werden derartige Schalldämpfer an Rohrgasquellen angeschlossen, reduzieren sie den Austrittsschall des Druckgases aus einer Rohrleitung. Im Rahmen der vorliegenden Erfindung gewährleisten sie den gewünschten Phosphinaustritt auf einer großen Fläche im direkten Kontakt mit dem umgebenden Luftstrom.

Anstelle einer Rohrleitung mit einem porösen Endstück, zum Beispiel in Form der beschriebenen Schalldämpfer, kann die Phosphineinleitung zum Beispiel auch so erfolgen, daß in dem Luftstrom ein Schlauch angeordnet wird, insbesondere als einseitig abgeschlossenes Schlauchstück, der aus einem Material besteht, das für eine Diffusion von Phosphin aus dem Innenraum des Schlauchs nach außen durchlässig ist. Auch auf diese Weise wird ein gleichmäßiger, langsamerer Übertritt von Phosphin in einen Luftstrom über einem längeren Zeitraum unter kontrollierten Bedingungen gewährleistet.

Es liegt selbstverständlich im Rahmen der vorliegenden Erfindung, poröse Materialien und solche, durch die Phosphin unter Diffusion hindurchtreten kann, in beliebiger Weise miteinander zu kombinieren, z.B. um die Phosphin-Austrittsmenge zu optimieren und/oder die Austrittsoberfläche zu modfizieren. Ein Beispiel ist die Auskleidung oder Oberflächenbeschichtung von porösen Röhren mit einem Material, durch das Phosphin diffundieren kann. Das letztgenannte Material kann dabei z.B. auch als dünne Beschichtung oder Anstrich auf ein mehr oder weniger starres poröses Substrat aufgebracht sein, und poröses Substrat und Beschichtung bilden zusammen die phosphindurchlässige Trennwand. Die Porengröße kann in einem solchen Falle in sehr weiten Grenzen variieren, und das eine Phosphindiffusion ermöglichende Material muß dann als solches nicht formstabil sein und kann z.B. auch als hochviskose Beschichtung vorliegen.

Eine besonders vorteilhafte Ausgestaltung des erfindungsgemäßen Verfahrens sieht vor, daß der Luftstrom, der das durch die phosphindurchlässige Trennwand austretende Phosphin aufnimmt, im wesentlichen von Luft gebildet wird, die man unter Verwendung geeigneter Ansaugeinrichtungen aus dem zu begasenden Raum bzw. Schüttgut abgesaugt hat, wonach man diese Luft mit Hilfe eines Sauggebläses durch das Rohr leitet, in dem sie mit Phosphin angereichert wird, wonach das Phosphin-Luft-Gemisch über entsprechende geeignete Einleitungseinrichtungen wieder in den zu begasenden Raum zurückgeführt wird. Die Ansaug- bzw. Einleitungseinrichtungen können zum Beispiel auch in das Schüttgut an verschiedenen Stellen und in verschiedene Tiefen eingestoßene Rohre oder Rohrlanzen sein. Die Kombination von Ansaugen und Einspeisen unterstützt eine gleichmäßige Verteilung des Phosphin-Luft-Gemisches im zu begasenden Raum bzw. Schüttgut, ohne daß durch die Einleitung des genannten Gemisches das Gasvolumen erhöht wird, so daß es nicht zu dem bekannten Aufblaseffekt kommt bzw. zum Risiko einer zufälligen, ungleichmäßigen Phosphinkonzentration.

Das Verfahren kann als kontinuierliches Kreislaufverfahren, als intermittierend arbeitendes Kreislaufverfahren oder auch so durchgeführt werden, daß man den zu begasenden Raum einmal gründlich mit dem Phosphin-Luft-Gemisch sättigt und dann über einen gewünschten Zeitraum in gasdicht abgeschlossener Form ruhen läßt.

Es ist bei dem erfindungsgemäßen Verfahren vorteilhaft, wenn man die Luft insbesondere dann, wenn man sie dem behandelten Gut entnimmt, von Staub reinigt sowie gegebenenfalls zusätzlich einer Behandlung zur Entfernung von reaktiven Hydroxyl-Radikalen unterwirft. Die Entfernung von Hydroxyl-Radikalen kann dabei auf an sich bekannte Weise dadurch erfolgen, daß man die Luft über oder durch ein mit einer geeigneten reaktiven Verbindung getränktes durchlässiges Substrat leitet, wobei als derartige Verbindung vor allem solche in Frage kommen, die im Hinblick auf einen Kontakt mit Lebensmitteln unbedenklich sind, zum Beispiel Diethylhydroxylamin. Soweit im speziellen Anwendungsfall zulässig, können aber auch andere Verbindungen, z.B. Anilin, verwendet werden.

Der Phosphorwasserstoff wird insbesondere dann, wenn er in einer weniger hochaufgereinigten Form eingesetzt wird, ebenfalls einer zusätzlichen Reinigung zur Entfernung von Diphosphin und höheren Phosphinen unterzogen, was zum Beispiel durch Durchströmen einer mit Molekularsieb gefüllten Säule erfolgen kann.

Die im Rahmen der vorliegenden Erfindung genutzte Möglichkeit, niederkonzentrierte Phosphin-Luft-Gemische direkt aus konzentriertem Phosphingas herzustellen, kann in verallgemeinerter Form auch für andere technische Anwendungsfälle genutzt werden, bei denen man Phosphin-Luft-Gemische benötigt. Zusätzlich zu dem Phosphin oder ggf. sogar anstelle von Phosphin können nach der beschriebenen Technik auch andere leichtentzündliche Gase oder Dämpfe in niedrigen Konzentrationen mit Luft vermischt werden, z.B. durch Anordnung einer weiteren Einleitungsstelle im Strömungsrohr oder durch Verbinden der Einleitungsstelle(n) mit einer anderen oder weiteren Gas- oder Dampfquelle.

Nachfolgend wird die vorliegende Erfindung unter Bezugnahme auf drei Figuren noch näher erläutert. In den Figuren zeigen
- Fig. 1: ein Fließschema für eine Ausführungsform einer Anlage zur Durchführung des erfindungsgemäßen Verfahrens;
- Fig. 2: eine erste Ausführungsform eines Mischrohrs mit einer Phosphineinleitung unter Verwendung eines porösen Elements; und
- Fig. 3: eine Alternative einer Ausführungsform einer rohrförmigen Mischkammer, bei der das Phosphin durch die Wand eines Schlauchs in den Luftstrom diffundiert.

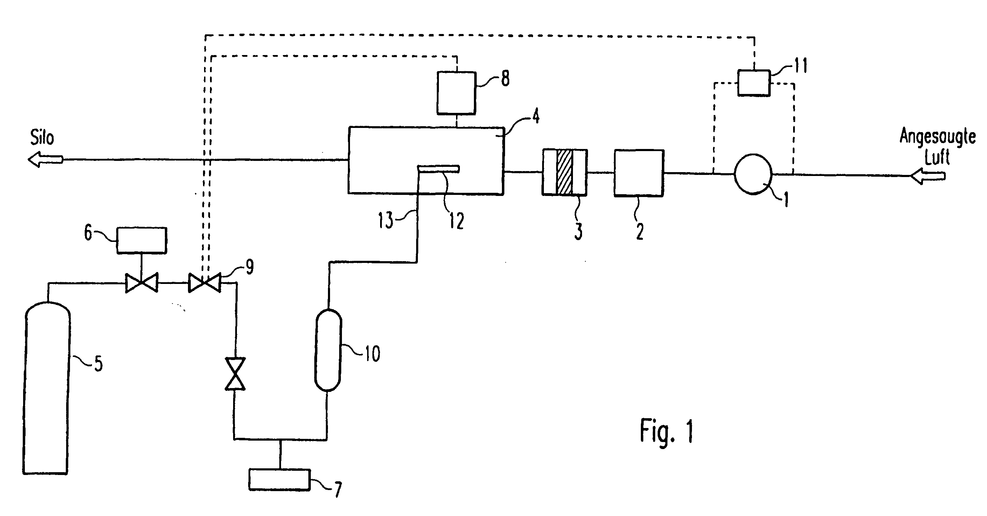

Anhand von Fig. 1 kann eine bevorzugte Ausführungsform für das erfindungsgemäße Verfahren wie folgt beschrieben werden: Von einem Gebläse 1 wird die Luft aus dem zu begasenden Raum bzw. den Hohlräumen eines Schüttguts oder auch aus der Umgebungsluft über einen Staubfilter 2 angesaugt und dann durch ein geeignetes Substrat 3 geleitet, beispielsweise in Form eines durchströmbaren faserigen oder körnigen Materials, das mit Anilin oder Diethylhydroxylamin getränkt ist, um die Konzentration von Hydroxyl-Radikalen in der Luft zu vermindern. Die auf diese weise vorgereinigte Luft wird der rohrförmigen Mischkammer 4 zugeführt, wo ihr die gewünschte Menge Phosphin zugemischt wird, die aus einer Phosphinquelle 5 erhalten wird, die Phosphin in konzentrierter und im wesentlichen fremdgasfreier Form liefert. Die Phosphinquelle ist in der Figur als Gasdruckflasche 5 mit einem Druckregelventil 6 schematisch gezeigt. Der gewünschte Volumenstrom des Phosphins aus der Gasflasche wird mit Hilfe eines Durchflußreglers 7 eingestellt. Vor seiner Einleitung in den Luftstrom wird der Phosphorwasserstoff vorzugsweise über eine mit Molekularsieb (Qualität 5A) gefüllte Säule 10 geleitet, um Diphosphine und höhere Phosphine zurückzuhalten. Danach gelangt das Phosphin in die Mischkammer 4 und tritt in den Luftstrom über, der die Mischkammer 4 durchströmt.

Die Mischkammer 4 ist in der gezeigten Ausführungsform mit einer Sicherheitseinrichtung in Form eines Temperaturdifferenzmelders 8 versehen, der eine zum Beispiel auf einer Entzündung des Phosphins beruhende Temperaturänderung detektiert und ein Absperrorgan 9 im Sinne einer Unterbrechung des Phosphinstroms betätigt. Als weitere Sicherheitseinrichtung wird die Konstanz des Luftvolumenstroms beispielsweise durch Differenzdruckmessung mit einem Druckditferenzmelder 11 am Gebläse 1 detektiert, und eine störungsbedingte Abnahme des Luftstromvolumens führt ebenfalls zur Unterbrechung der Phosphinzufuhr.

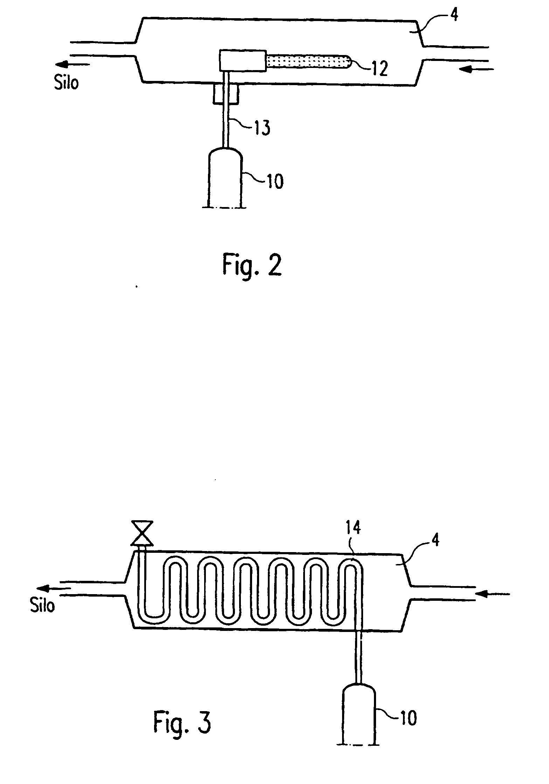

Fig. 2 zeigt schematisch eine erste Ausführungsform einer rohrförmigen Mischkammer 4, bei der das Phosphin über eine axial im Mischkammerrohr angeordnete poröse Trennwand 12 mit einer ausgedehnten Oberfläche, die hier die Form eines im wesentlichen geschlossenen porösen Zylinders aufweist, erfolgt.

Gemäß Fig. 3 erfolgt die Anreicherung des Luftstroms mit Phosphin dadurch, daß Phosphin aus einem im Luftstrom angeordneten einseitig geschlossenen Schlauch 14 geeigneter Länge in den Luftstrom diffundiert.

Bei der in Fig. 2 gezeigten Ausführungsform der Mischkammer 4 ist die Kammer somit als Rohr ausgebildet, dessen Durchmesser in Abhängigkeit von dem gewünschten Luftstrom gewählt wird, wobei eine Mindest-Strömungsgeschwindigkeit des Luftstroms von 10 m/s erreicht werden sollte. Das Phosphin wird über ein durch die Wand der Kammer geführtes Rohr 13 zugeführt und tritt durch eine poröse Trennwand aus, die eine geeignet geformte Austrittsoberfläche bildet. Die Trennwand kann eine Platte, ein Rohr oder ein Element in Form des beschriebenen Schalldämpfers sein. Es ist selbstverständlich möglich, in der Mischkammer mehr als nur ein Rohr 13 anzuordnen, und es ist für spezielle Anwendungen auch denkbar und liegt im Rahmen der vorliegenden Erfindung, zusätzliche Einleitungsstellen für andere gasförmige, ggf. ebenfalls leichtentzündliche Bestandteile vorzusehen.

Bei der in Fig. 3 gezeigten alternativen Ausführung der Mischkammer 4 besteht diese aus einem Kanal, in dem ein phosphorwasserstoffdurchlässiger Schlauch 14 (zum Beispiel ein Polyethylenschlauch) so angeordnet ist, daß er von dem Luftstrom frei umspült wird. In diesem Falle kann die Strömungsgeschwindigkeit aufgrund der geringen austretenden Phosphinmenge gering sein (< 1 m/s). Der Schlauch wird mit Phosphin gefüllt, dann einseitig verschlossen und aus einer Phosphorwasserstoffquelle mit Phosphorwasserstoff beaufschlagt. Durch Diffusion dringt der Phosphorwasserstoff über eine relativ große Oberfläche sehr langsam in den Kanal bzw. in die vorbeiströmende Luft.

### Beispiel

Das Beispiel betrifft die Begasung eines Silos mit 500 t Getreide.
Dosierung: 3 g PH₃ pro t

Zur Begasung von 500 t Getreide unter Anwendung von 3g PH₃ pro t müssen 1,500 g Phosphin in die Silozelle eingeführt werden. Setzt man die obere Konzentrationsgrenze im Volumenstrom auf 10.000 ppm (= ca. 14 g/m³) an, benötigt man ca. 100 m³ Luft. Hat die Mischkammer einen Durchmesser von 10 cm³ und wird die Luft aus der Silozelle mit einer Geschwindigkeit von 10 m/s angesaugt und durch die Mischkammer geführt, so benötigt man für 1 m³ Luft 100 Sekunden. Um die benötigte 100 m³ Luft einzuleiten, beträgt der Zeitbedarf somit 10.000 s bzw. 2 h 46 min. Eine solche Verfahrensvariante läßt sich so in die Praxis umsetzen, daß man z.B. drei Ansaugrohre mit Rohrquerschnitten von etwa 3,3 cm², die geeignete, gegen ein Eindringen des Getreides, zum Beispiel durch Siebe, geschützte Ansaugöffnungen aufweisen, im zu begasenden, gegen die Umgebungsluft abgedichteten Gut anordnet und mit der Saugseite eines Gebläses verbindet. Es kann jedoch auch Luft aus dem freien Luftraum oder einer anderen geeigneten Stelle des hinreichend abgedichteten zu begasenden Raums angesuagt werden.

Die angesaugte Luft wird durch das Gebläse durch die Mischkammer gefördert und nach dem Durchströmen der Mischkammer und der dabei erfolgenden Anreicherung mit Phosphin in den zu begasenden Raum bzw. in das Schüttgut zurückgeführt, indem man z.B. entsprechende Rohre wie für das Ansaugen auch für die Einleitung des Phosphins-Luft-Gemisches verwendet.

## Patentansprüche

1. Verfahren zur Bekämpfung von Schädlingen in hinreichend gasdichten Räumen unter Verwendung von gasförmigem Phosphin (Phosphorwasserstoff, PH₃) als Begasungsmittel, **dadurch gekennzeichnet, daß** man
- eine Quelle für Phosphin in Form einer Phosphin-Gasflasche bereitstellt, die Phosphin in konzentrierter Form liefert,
- das konzentrierte gasförmige Phosphin aus der Phosphinquelle durch eine phosphindurchlässige Trennwand hindurch so in einen Luftstrom einleitet, daß das eingeleitete Phosphin im Bereich seiner Einleitung sofort unter die Konzentrationsgrenze für die Selbstentzündlichkeit von Phosphin-Luft-Gemischen verdünnt wird, und
- das gebildete verdünnte Phosphin-Luft-Gemisch in den zu begasenden Raum einleitet.

2. Verfahren nach Anspruch 1, **dadurch gekennzeichnet, daß** die Einleitung des Phosphins in den Luftstrom durch eine phosphindurchlässige Trennwand erfolgt, die von der Luft umströmt wird und einen flächigen Austritt des Phosphins aus der Phosphinquelle in den Luftstrom durch Poren oder durch Diffusion ermöglicht.

3. Verfahren nach einem der vorausgehenden Ansprüche, **dadurch gekennzeichnet, daß** die phosphindurchlässige Trennwand von einem porösen Schalldämpfer für pneumatische Ausrüstungen oder einem porösen Rohr oder Schlauch oder einem Rohr oder Schlauch aus einem phosphindurchlässigen Material gebildet wird.

4. Verfahren nach einem der Ansprüche 1 bis 3, **dadurch gekennzeichnet, daß** die Eintrittsstelle in einem Rohr angeordnet ist, durch das der Luftstrom hindurchgeleitet wird.

5. Verfahren nach Anspruch 4, **dadurch gekennzeichnet, daß** der Luftstrom wenigstens teilweise aus Luft besteht, die aus den zu begasenden, hinreichend gasdicht abgedichteten Raümen und/oder den darin gelagerten Gütern abgesaugt wurde, und daß die Luft nach ihrer Anreicherung mit Phosphin wieder in die zu begasenden Räume und/oder die darin gelagerten Güter zurückgeführt wird.

6. Verfahren nach einem der Ansprüche 1 bis 5, **dadurch gekennzeichnet, daß** die Begasung als Begasung von mit Schädlingen befallenen Räumen und darin gelagerten landwirtschaftlichen Gütern oder Gütern in gasdicht abgedeckten Getreide-Flachlagern oder -Schüttlagern erfolgt.

7. Verfahren nach einem der Ansprüche 1 bis 6, **dadurch gekennzeichnet, daß** das Phosphin vor seiner Einleitung in den Luftstrom einer Reinigungsbehandlung zur Entfernung von Diphosphin und/oder der Luftstrom einer Reinigungsbehandlung zur Entfernung von Staub und/oder Hydroxyl-Radikalen unterzogen wird.

8. Verfahren zur Herstellung von niederkonzentrierten Phosphin-Luft-Gemischen mit Phosphinkonzentrationen von weniger als etwa 1,80 Volumen-%, bei dem man
- eine Quelle für Phosphin in Form einer Phosphin-Gasflasche bereitstellt, die Phosphin in konzentrierter, fremdgasfreier Form liefert,
- das konzentrierte gasförmige Phosphin aus der Phosphin-Gasflasche durch eine phosphindurchlässige Trennwand so in einen Luftstrom einleitet, daß das eingeleitete Phosphin an seiner Einleitungsstelle sofort unter die Konzentrationsgrenze für die Selbstentzündlichkeit von Phosphin-Luft-Gemischen verdünnt wird, und
- das gebildete verdünnte Phosphin-Luft-Gemisch seiner Endverwendung zuführt.

9. Vorrichtung zur Durchführung eines Verfahrens nach einem der Ansprüche 1 bis 8, **gekennzeichnet durch**
- eine Gasflasche (5) mit einem Druckregelventil (6), die Phosphin in konzentrierter Form enthält,
- wobei die Gasflasche (5) mit einer Rohrleitung (13) verbunden ist, auf deren Ende ein PH₃-durchlässiges poröses Abschlußstück (12) montiert ist, und
- das Ende der Rohrleitung (13) mit dem porösen Abschlußsstück (12) im zentralen Bereich eines Rohrs (4) angeordnete ist, das mit Zu- und Ableitungen für einen zwangsgeförderten Luftstrom verbunden ist.

10. Vorrichtung nach Anspruch 9, **dadurch gekennzeichnet, dass** das poröse Abschlußstück (12) ein poröser Schalldämpfer für pneumatische Ausrüstungen ist.

## Claims

1. Method for controlling pests in sufficiently gas-tight spaces, using gaseous phosphine (phosphorous hydride, PH₃) as fumigant,
**characterized in that**
- a source for phosphine in the form of a phosphine gas-bottle is provided, which delivers phosphine in concentrated form,
- the concentrated gaseous phosphine is guided out of the phosphine source through a phosphine permeable dividing wall into an air stream, so that the introduced phosphine is immediately diluted at the site of its introduction to below the concentration limit for self-ignition of phosphine-air mixtures, and
- the resulting diluted phosphine-air mixture is introduced into the space to be fumigated.

2. Method according to claim 1, **characterized in that** the introduction of the phosphine into the air stream takes place through a phosphine permeable dividing wall, which is surrounded by an air stream and provides a planar discharge of the phosphine from the phosphine source into the air stream through pores or by means of diffusion.

3. Method according to any one of the preceding claims, **characterized in that** the phosphine permeable dividing wall is formed by a porous sound absorber for pneumatic equipments, or by a porous pipe or hose, or a pipe or hose made of a phosphine permeable material.

4. Method according to any one of claims 1 to 3, **characterized in that** the site of introduction is located in a pipe, through which the air stream is guided.

5. Method according to claim 4, **characterized in that** the air stream consists at least partially of air, which is taken in from the sufficiently gas-tightly sealed spaces and/or the goods stored therein to be fumigated, and that the air, after its enrichment with phosphine, is returned again to the spaces to be fumigated and/or the goods stored therein.

6. Method according to any one of claims 1 to 5, **characterized in that** the fumigation is carried out as fumigation of spaces infested with pests and of agricultural goods stored therein or of goods in gas-tightly covered grain floor stores or bulk stores.

7. Method according to any one of claims 1 to 6, **characterized in that** the phosphine, before its introduction into the air stream, is subjected to a purification treatment for removal of diphosphine and/or the air stream is subjected to a purification treatment for removal of dust and/or hydroxyl radicals.

8. Method for producing low-concentration phosphine air mixtures having phosphine concentrations of less than about 1,80 % by volume, wherein
- a source for phosphine in the form of a phosphine gas-bottle is provided, which delivers phosphine in concentrated form free of other gases,
- the concentrated gaseous phosphine is guided out of the phosphine gas-bottle through a phosphine permeable dividing wall into an air stream so that the introduced phosphine is immediately diluted at the site of its introduction to below the concentration limit for self-ignition of phosphine-air mixtures, and
- the resulting diluted phosphine-air mixture is supplied to its end use.

9. Apparatus for carrying out a method according to any one of claims 1 to 8, **characterized by**
- a gas bottle (5) having a pressure control valve (6), which contains phosphine in concentrated form,
- said gas bottle (5) being connected to a tubular conduit (13) to the end of which a PH₃ permeable porous end piece (12) is mounted, and
- said end of the tubular conduit (13) with the porous end piece (12) being located in the central region of a pipe (4) connected to supply and discharge lines for a forced air stream.

10. Apparatus according to claim 9, **characterized in that** the porous end piece (12) is a porous sound absorber for pneumatic equipments.

## Revendications

1. Procédé pour combattre des organismes nuisibles dans des espaces suffisamment étanches au gaz en utilisant de la phosphine gazeuse (hydrogène phosphoré, PH₃) comme agent de gazage, **caractérisé en ce que**
- l'on prévoit une source de phosphine qui présente la forme d'une bonbonne de phosphine gazeuse qui délivre de la phosphine concentrée,
- l'on introduit la phosphine gazeuse concentrée qui provient de la source de phosphine à travers une paroi de séparation perméable à la phosphine de telle sorte que, dans la zone d'introduction, la concentration en phosphine descende d'emblée en dessous du seuil de concentration d'auto-inflammabilité des mélanges d'air et de phosphine et
- l'on introduit le mélange dilué de phosphine et d'air dans l'espace à gazer.

2. Procédé selon la revendication 1, **caractérisé en ce que** la phosphine est introduite dans l'écoulement d'air à travers une paroi de séparation perméable à la phosphine, qui est contournée par l'air et qui permet à la phosphine qui provient de la source de phosphine de sortir en surface vers l'écoulement d'air à travers des pores ou par diffusion.

3. Procédé selon l'une des revendications précédentes, **caractérisé en ce que** la paroi de séparation perméable à la phosphine est formée par un amortisseur acoustique poreux pour équipement pneumatique, d'un tube ou tuyau poreux ou d'un tube ou d'un tuyau en un matériau perméable à la phosphine.

4. Procédé selon l'une des revendications 1 à 3, **caractérisé en ce que** l'emplacement d'entrée est agencé dans un tube dans lequel l'écoulement d'air est guidé.

5. Procédé selon la revendication 4, **caractérisé en ce que** l'écoulement d'air est constitué au moins en partie d'air puisé dans les espaces à gazer qui sont rendus suffisamment étanches au gaz et/ou dans les produits qui y sont conservés et **en ce qu'**après avoir été enrichi en phosphine, l'air est renvoyé dans les espaces à gazer et/ou sur les produits qui y sont conservés.

6. Procédé selon l'une des revendications 1 à 5, **caractérisé en ce que** le gazage est un gazage d'espaces envahis par des organismes nuisibles et de produits agricoles qui y sont conservés ou de produits qui se trouvent dans des entrepôts de produits agricoles ou des silos de produits agricoles fermés de manière étanche au gaz.

7. Procédé selon l'une des revendications 1 à 6, **caractérisé en ce qu'**avant d'être introduite dans l'écoulement d'air, la phosphine subit un traitement de purification qui en sépare la diphosphine et/ou dans lequel l'air subit un traitement de purification qui en retire la poussière et/ou les groupes hydroxyle.

8. Procédé de préparation de mélanges peu concentrés de phosphine et d'air dont la concentration en phosphine est inférieure à sensiblement 1,80 % en volume, dans lequel
- on prévoit une source de phosphine qui présente la forme d'une bonbonne de phosphine gazeuse qui délivre de la phosphine concentrée exempte d'autres gaz,
- on introduit la phosphine gazeuse concentrée qui provient de la bonbonne de phosphine à travers une paroi de séparation perméable à la phosphine de telle sorte qu'à l'emplacement d'introduction, la concentration en phosphine descende d'emblée en dessous du seuil de concentration d'auto-inflammabilité des mélanges d'air et de phosphine et
- on amène le mélange dilué de phosphine et d'air vers son utilisation finale.

9. Dispositif pour exécuter un procédé selon l'une des revendications 1 à 8, **caractérisé par** :
- une bonbonne de gaz (5) qui présente une soupape de régulation de pression (6) et qui contient de la phosphine concentrée,
- la bonbonne de gaz (5) étant reliée à un conduit tubulaire (13) à l'extrémité duquel est montée une pièce de fermeture (12) poreuse et perméable au PH₃,
- l'extrémité du conduit tubulaire (13), qui présente la pièce poreuse de fermeture (12) étant agencée dans la zone centrale d'un tube (4) relié à des conduits d'amenée et des conduits d'évacuation pour délivrer un écoulement d'air forcé.

10. Dispositif selon la revendication 9, **caractérisé en ce que** la pièce poreuse de fermeture (12) est un amortisseur acoustique poreux pour équipements pneumatiques.
